# EUROPÄISCHE PATENTSCHRIFT

(11) **EP 3 584 418 B1**
(45) Veröffentlichungstag und Bekanntmachung des Hinweises auf die Patenterteilung: **11.08.2021**
(21) Anmeldenummer: 19179865.1
(22) Anmeldetag: 13.06.2019
(51) Int. Cl.: F01N 3/035, F01N 3/10, F01N 9/00, F01N 13/00, F01N 3/023, F01N 3/20

(54) **ABGASNACHBEHANDLUNGSSYSTEM UND VERFAHREN ZUR REGENERATION EINES PARTIKELFILTERS**
WASTE GAS TREATMENT SYSTEM AND METHOD FOR REGENERATING A PARTICLE FILTER
SYSTÈME DE POST-TRAITEMENT DES GAZ D'ÉCHAPPEMENT ET PROCÉDÉ DE RÉGÉNÉRATION D'UN FILTRE À PARTICULES

(30) Priorität: 19.06.2018 DE 102018114681
(43) Veröffentlichungstag der Anmeldung: 25.12.2019
(73) Patentinhaber: Volkswagen AG, 38440 Wolfsburg (DE)
(72) Erfinder: Paukner, Stefan, 38442 Wolfsburg (DE); Baron von Ceumern-Lindenstjerna, Falk-Christian, 38124 Braunschweig (DE); Manz, Michael Alexander, 30855 Langenhagen (DE)
(74) Vertreter: Gulde & Partner

(56) Entgegenhaltungen:
- WO-A1-2004/061278
- DE-A1-102015 212 514
- DE-A1-102016 122 304
- GB-A- 2 555 851

## Beschreibung

Die Erfindung betrifft ein Abgasnachbehandlungssystem für einen Verbrennungsmotor sowie ein Verfahren zur Regeneration eines Partikelfilters in der Abgasanlage eines Ottomotors.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Solche Rußpartikel entstehen besonders nach einem Kaltstart des Verbrennungsmotors aufgrund einer unvollständigen Verbrennung in Kombination mit einem überstöchiometrischen Verbrennungsluftverhältnis nach dem Kaltstart, kalter Zylinderwände sowie der heterogenen Gemischverteilung in den Brennräumen des Verbrennungsmotors. Im Gegensatz zur Beladung eines Dieselpartikelfilters erfolgt die Rußbeladung eines Ottopartikelfilters im Wesentlichen in Abhängigkeit der Brennraumtemperatur und nimmt mit zunehmender Brennraumtemperatur ab. Die Kaltstartphase ist somit maßgeblich für die Einhaltung der gesetzlich vorgeschriebenen Partikelgrenzwerte sowohl bezüglich der Partikelmasse als auch bezüglich der Partikelanzahl. Bei kalten Außentemperaturen, insbesondere bei Umgebungstemperaturen unterhalb von 0°C werden bei einem Ottomotor aufgrund der geringen Gemischhomogenisierung und Verdampfung des Kraftstoffs sowie der Startanreicherung besonders hohe Partikelemissionen emittiert. Zudem führt ein Kaltstart mit einem unterstöchiometrischen, fetten Verbrennungsluftverhältnis zu höheren Emissionen an Kohlenmonoxid (CO) und unverbrannten Kohlenwasserstoffen (HC), da eine Konvertierung in Kohlenstoffdioxid und Wasserdampf aufgrund des kalten Katalysators noch nicht möglich ist. Im Fahrbetrieb wird bei Kraftfahrzeugen mit einem Ottopartikelfilter dieser Ottopartikelfilter dann weiter mit Ruß beladen. Damit der Abgasgegendruck nicht zu stark ansteigt, muss dieser Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann.

Aufgrund der guten Wirkungsgrade beim Ottomotor ist eine Regeneration eines Partikelfilters in Unterbodenposition in bestimmten Betriebssituationen unmöglich, sodass die Regeneration eines Partikelfilters in Unterbodenlage spezieller Fahrzyklen bedarf.

Die DE 10 2010 046 747 A1 offenbart ein Abgasnachbehandlungssystem für einen Ottomotor sowie ein Verfahren zur Abgasnachbehandlung. Dabei ist stromabwärts eines Drei-Wege-Katalysators ein Partikelfilter angeordnet, wobei zur Regeneration der im Partikelfilter zurückgehaltenen Rußpartikel ein Sekundärluftsystem bereitgestellt werden kann, welches stromabwärts des Drei-Wege-Katalysators und stromaufwärts des Partikelfilters Frischluft in die Abgasanlage einbläst. Dabei wird die Sekundärluft genutzt, um unverbrannte Abgasbestandteile, insbesondere unverbrannte Kohlenwasserstoffe, exotherm umzusetzen und den Abgasstrom aufzuheizen sowie den zur Regeneration des Partikelfilters notwendigen Sauerstoff zu liefern.

Aus der DE 10 2015 215 373 A1 ist ein Verbrennungsmotor mit einer Abgasanlage bekannt, bei dem Ansaugluft stromabwärts eines Verdichters eines Abgasturboladers abgezapft und dem Abgaskanal stromabwärts der Turbine des Abgasturboladers zugeführt wird. Dabei sind in der Abgasanlage stromabwärts der Einleitstelle für die Sekundärluft ein Drei-Wege-Katalysator und stromabwärts des Drei-Wege-Katalysators ein Partikelfilter angeordnet.

Die DE 10 2016 102 325 A1 offenbart ein Abgasnachbehandlungssystem für einen Verbrennungsmotor mit einem motornahen Drei-Wege-Katalysator und einem stromabwärts des Drei-Wege-Katalysators angeordneten Partikelfilter, wobei unmittelbar stromaufwärts des Partikelfilters Sekundärluft in die Abgasanlage eingebracht werden kann, um die Oxidation des im Partikelfilters zurückgehaltenen Rußes zu unterstützen.

Die DE 10 2015 212 514 A1 offenbart ein Abgasnachbehandlungssystem sowie ein Verfahren zur Abgasnachbehandlung eines Verbrennungsmotors. Das Abgasnachbehandlungssystem umfasst einen Abgaskanal, in welchem in Strömungsrichtung eines Abgasstroms durch den Abgaskanal ein Drei-Wege-Katalysator und stromabwärts des Drei-Wege-Katalysator ein Partikelfilter angeordnet sind. Dabei ist stromabwärts des Drei-Wege-Katalysator und stromaufwärts des Partikelfilters eine Einleitstelle für Sekundärluft vorgesehen, wobei die Sekundärluft genutzt wird, um bei einen unterstöchiometrisches Betrieb des Verbrennungsmotors die unverbrannten Abgaskomponenten exotherm auf der katalytisch wirksamen Oberfläche des Partikelfilters umzusetzen und den Partikelfilter somit auf seine Regenerationstemperatur aufzuheizen.

DE 10 2016 122 304 A1 beschreibt ein Verfahren zum Aufheizen eines elektrisch beheizbaren Katalysators in einem Abgaskanal eines Kraftfahrzeuges mit Verbrennungsmotor. Um den Katalysator vor dem Start des Verbrennungsmotors aufzuheizen, ist vorgesehen, dass der Katalysator bereits vor dem Start des Verbrennungsmotors elektrisch aufgeheizt wird und bereits mit dem Motorstart eine effiziente Abgasnachbehandlung ermöglicht.

Aus der WO 2004/061 278 A1 ist ein Dieselmotor mit einem Abgasnachbehandlungssystem sowie ein Verfahren zur Abgasnachbehandlung eines Dieselmotors mit einem solchen Abgasnachbehandlungssystem bekannt. Das Abgasnachbehandlungssystem umfasst einen Stickoxid-Speicherkatalysator, einen NO₂-Bildungskatalysator und einen SCR-Katalysator. Dabei werden die im Stickoxid-Speicherkatalysator eingespeicherten Stickoxide mithilfe von Sekundärluft auf dem NO₂-Bildungskatalysator oxidiert und die NO₂-Verbindungen mit Hilfe von in die Abgasanlage eindosierter Harnstofflösung durch den SCR-Katalysator zu molekularem Stickstoff reduziert.

Nachteilig an den bekannten Lösungen ist jedoch, dass eine Regeneration des Partikelfilters in Unterbodenlage eines Kraftfahrzeuges kurz nach einem Motorstart des Verbrennungsmotors nicht möglich ist, weil der Partikelfilter nicht die zur Oxidation des zurückgehaltenen Rußes notwendige Regenerationstemperatur erreicht.

Aufgabe der Erfindung ist es, die Regeneration des Partikelfilters in allen Betriebssituationen des Verbrennungsmotors zu ermöglichen.

Erfindungsgemäß wird diese Aufgabe durch ein Abgasnachbehandlungssystem für einen Verbrennungsmotor, insbesondere für einen fremdgezündeten Verbrennungsmotor nach dem Ottoprinzip, gelöst, wobei das Abgasnachbehandlungssystem einen motornahen Drei-Wege-Katalysator und einen stromabwärts des motornahen Drei-Wege-Katalysators angeordneten Partikelfilter oder Vier-Wege-Katalysator umfasst. Erfindungsgemäß ist vorgesehen, dass stromabwärts des motornahen Drei-Wege-Katalysators und stromaufwärts des Partikelfilters oder des Vier-Wege-Katalysators ein elektrisch beheizbarer Drei-Wege-Katalysator angeordnet ist, wobei stromabwärts des motornahen Drei-Wege-Katalysators und stromaufwärts des elektrisch beheizbaren Drei-Wege-Katalysators eine Einleitstelle zum Einleiten von Sekundärluft in einen Abgaskanal der Abgasanlage ausgebildet ist. Unter einer motornahen Position ist in diesem Zusammenhang eine Position des Drei-Wege-Katalysators in der Abgasanlage mit einer Abgaslauflänge ab einem Auslass des Verbrennungsmotors von weniger als 80 cm Abgaslauflänge, vorzugsweise von weniger als 50 cm Abgaslauflänge, zu verstehen. Das vorgeschlagene Abgasnachbehandlungssystem ermöglicht eine emissionsarme, schnelle und weitgehend vom Lastprofil des Verbrennungsmotors beziehungsweise Fahrprofil eines Kraftfahrzeuges mit Verbrennungsmotor unabhängige Regeneration des Partikelfilters oder Vier-Wege-Katalysators, insbesondere eines Ottopartikelfilters in Unterbodenlage eines Kraftfahrzeuges. Die zur Regeneration des Partikelfilters oder Vier-Wege-Katalysators *notwendige Temperaturwird* mithilfe des elektrisch beheizbaren Drei-Wege-Katalysators im Zusammenspiel mit einer motorischen Fettverstellung und einer gleichzeitigen Sekundärlufteinblasung erzielt. Idealerweise ist die Einleitstelle für die Sekundärluft unmittelbar stromabwärts des motornahen Drei-Wege-Katalysators ausgebildet und somit möglichst weit von dem elektrisch beheizbaren Drei-Wege-Katalysator beabstandet, um eine bestmögliche Vermischung des Abgases mit der Frischluft aus dem Sekundärluftsystem vor Eintritt in den elektrisch beheizbaren Drei-Wege-Katalysator und den Partikelfilter oder Vier-Wege-Katalysator zu erreichen.

Durch die in den abhängigen Ansprüchen aufgeführten Merkmale sind vorteilhafte Verbesserungen und Weiterentwicklungen des im unabhängigen Anspruch angegebenen Abgasnachbehandlungssystems möglich.

In bevorzugter Ausgestaltung der Erfindung ist vorgesehen, dass der Partikelfilter frei von einer katalytisch wirksamen Beschichtung ausgeführt ist. Durch eine beschichtungsfreie Ausführung des Partikelfilters wird der Abgasgegendruck gesenkt, wodurch der Verbrauch des Verbrennungsmotors reduziert werden kann. Gleichzeitig können die Regenerationsintervalle verlängert werden, da es bei gleichen Betriebsbedingungen länger dauert, bis der Abgasgegendruck über den Partikelfilter derart angestiegen ist, dass eine Regeneration des Partikelfilters notwendig ist. Ferner besteht bei einem beschichtungsfreien Partikelfilter kein Einfluss auf die Konvertierung der gasförmigen Abgaskomponenten, wodurch eine einfache On-Board-Diagnose des Partikelfilters über Differenzdrucksensoren erfolgen kann.

In einer vorteilhaften Ausführungsform des Abgasnachbehandlungssystems ist vorgesehen, dass der elektrisch beheizbare Drei-Wege-Katalysator frei von einem Sauerstoffspeicher ausgeführt ist. Dadurch kann der elektrisch beheizbare Drei-Wege-Katalysator unverbrannten Kohlenwasserstoff und Wasserstoff, welcher bei einem unterstöchiometrischen Betrieb auf dem ersten Drei-Wege-Katalysator entsteht, exotherm umsetzen und in Wasserdampf und Kohlenstoffdioxid umsetzen. Um den Sauerstoffgehalt des Abgases bei Eintritt in den Partikelfilter oder Vier-Wege-Katalysator zu bestimmen, ist der elektrisch beheizbare Drei-Wege-Katalysator mit einem Washcoat ohne Sauerstoffspeicherfähigkeit ausgeführt, um keine zeitliche Verzögerung des Lambdasondensignals an der Lambdasonde stromabwärts des elektrisch beheizbaren Drei-Wege-Katalysators und stromaufwärts des Partikelfilters oder des Vier-Wege-Katalysators zu erhalten.

Erfindungsgemäß ist vorgesehen, dass stromabwärts der Einleitstelle für die Sekundärluft und stromaufwärts des elektrisch beheizbaren Drei-Wege-Katalysators ein Wasserstoffkatalysator angeordnet ist. Der Wasserstoffkatalysator unterstützt dabei, das Abgasluftverhältnis nach Einleiten von Sekundärluft stromaufwärts des elektrisch beheizbaren Drei-Wege-Katalysators während der Fettverstellung des Verbrennungsmotors mit einer Lambdasonde zu messen, da der Wasserstoff im Abgas ansonsten zu einer Verfälschung des Messignals an der Lambdasonde führt und es somit zu Abweichungen im gemessenen Abgasluftverhältnis kommen kann.

Besonders bevorzugt ist dabei, wenn in der Abgasanlage stromaufwärts des motornahen Drei-Wege-Katalysators eine erste Lambdasonde, insbesondere eine Breitbandsonde und stromabwärts des Wasserstoff-Katalysators und stromaufwärts des elektrisch beheizbaren Drei-Wege-Katalysators eine zweite Lambdasonde, insbesondere eine zweite Breitbandsonde, angeordnet ist. Alternativ kann die zweite Lambdasonde auch als Sprungsonde ausgeführt werden. Durch die Lambdasonden können das Verbrennungsluftverhältnis des Verbrennungsmotors und das Abgasluftverhältnis bei aktivierter Sekundärlufteinblasung bestimmt werden. Somit kann dem Partikelfilter ein entsprechender Luftüberschuss zur Oxidation des im Partikelfilter zurückgehaltenen Rußes bereitgestellt werden, ohne dass die Gefahr eines unkontrollierten Rußabbrandes aufgrund eines hohen Sauerstoffüberschusses entsteht.

Alternativ ist mit Vorteil vorgesehen, dass der Partikelfilter mit einer drei-Wege-katalytisch wirksamen Beschichtung als Vier-Wege-Katalysator ausgeführt ist und in der Abgasanlage stromaufwärts des motornahen Drei-Wege-Katalysators eine erste Lambdasonde, insbesondere eine Breitbandsonde, sowie stromabwärts des elektrisch beheizbaren Drei-Wege-Katalysators und stromaufwärts des Vier-Wege-Katalysators eine zweite Lambdasonde angeordnet sind. Durch einen Vier-Wege-Katalysator kann das katalytisch wirksame Volumen vergrößert werden, sodass der motornahe Drei-Wege-Katalysator und/oder der elektrisch beheizbare Drei-Wege-Katalysator kleiner ausgeführt werden können oder die Konvertierungsleistung, insbesondere bei hohen Lasten und hohen Drehzahlen, erhöht wird.

In weiterer bevorzugter Ausgestaltung der Erfindung ist vorgesehen, dass die Sekundärluft durch ein Sekundärluftsystem bereitgestellt wird, welches eine Sekundärluftpumpe und eine Sekundärluftleitung umfasst, welche die Sekundärluftpumpe mit der Einleitstelle verbindet, wobei in der Sekundärluftleitung ein Sekundärluftventil angeordnet ist. Durch die Bereitstellung der Sekundärluft über eine Sekundärluftpumpe kann im Vergleich zu einer Sekundärluftzufuhr durch einen Abgriff von Luft aus dem Luftversorgungssystem stromabwärts eines Verdichters eines Abgasturboladers ein Sekundärluftstrom unabhängig von der Betriebssituation des Verbrennungsmotors bereitgestellt werden. Dabei kann insbesondere bei Schwachlast oder im Leerlauf eine Sekundärlufteinbringung realisiert werden, welche bei einer Luftversorgung durch einen Abgriff aus dem Luftversorgungssystem aufgrund der niedrigen Leistung des Verdichters nicht oder nur unzureichend möglich wäre.

Erfindungsgemäß wird ein Verfahren zur Regeneration eines Partikelfilters oder eines Vier-Wege-Katalysators in der Abgasanlage eines Verbrennungsmotors vorgeschlagen, wobei der Verbrennungsmotor mit seinem Auslass mit einer Abgasanlage verbunden ist, in welcher in Strömungsrichtung eines Abgases durch die Abgasanlage ein motornaher Drei-Wege-Katalysator, stromabwärts des motornahen Drei-Wege-Katalysators ein elektrisch beheizbarer Drei-Wege-Katalysator und stromabwärts des elektrisch beheizbaren Drei-Wege-Katalysators ein Partikelfilter oder ein Vier-Wege-Katalysator angeordnet ist, wobei stromabwärts des motornahen Drei-Wege-Katalysators (22) und stromaufwärts des elektrisch beheizbaren Drei-Wege-Katalysators (24) eine Einleitstelle (48) zum Einleiten von Sekundärluft in einen Abgaskanal (18) der Abgasanlage (20) ausgebildet ist, und stromabwärts der Einleitstelle (48) und stromaufwärts des elektrisch beheizbaren Drei-Wege-Katalysators(24) ein Wasserstoff-Katalysator (28) angeordnet ist, sowie mit einem Sekundärluftsystem, mit welchem stromabwärts des motornahen Drei-Wege-Katalysators und stromaufwärts des elektrisch beheizbaren Drei-Wege-Katalysators Sekundärluft in einen Abgaskanal der Abgasanlage einleitbar ist, umfassend folgende Schritte:
- Aktivieren des elektrisch beheizbaren Drei-Wege-Katalysators, wenn eine Regeneration des Partikelfilters oder des Vier-Wege-Katalysators angefordert wird,
- Aufheizen des elektrisch beheizbaren Drei-Wege-Katalysators auf seine Light-Off-Temperatur,
- Verstellen des Verbrennungsluftverhältnisses des Verbrennungsmotors von einem stöchiometrischen Verbrennungsluftverhältnis auf ein unterstöchiometrisches Verbrennungsluftverhältnis, sowie gleichzeitiges
- Einblasen von Sekundärluft in die Abgasanlage stromabwärts des motornahen Drei-Wege-Katalysators, sodass sich ein überstöchiometrisches Abgasluftverhältnis am Eingang des Partikelfilters oder des Vier-Wege-Katalysators einstellt.

Das vorgeschlagene Verfahren ermöglich eine emissionsarme, schnelle und weitgehend vom Lastprofil des Verbrennungsmotors beziehungsweise Fahrprofil eines Kraftfahrzeuges mit Verbrennungsmotor unabhängige Regeneration des Partikelfilters oder Vier-Wege-Katalysators, insbesondere eines Ottopartikelfilters in Unterbodenlage eines Kraftfahrzeuges. Die zur Regeneration des Partikelfilters oder Vier-Wege-Katalysators *notwendige Temperatur* wird mithilfe des elektrisch beheizbaren Drei-Wege-Katalysators im Zusammenspiel mit einer motorischen Fettverstellung und einer gleichzeitigen Sekundärlufteinblasung erzielt. Das Ende der Regeneration wird über ein Beladungsmodell oder eine Differenzdruckmessung gesteuert.

In einer vorteilhaften Weiterentwicklung des Verfahrens ist vorgesehen, dass die Regeneration des Partikelfilters oder des Vier-Wege-Katalysators beendet wird, wenn die Druckdifferenz über den Partikelfilter oder den Vier-Wege-Katalysator einen Schwellenwert unterschreitet. Unterschreitet der Differenzdurch über dem Partikelfilter einen definierten Schwellenwert, kann von einer vollständigen Regeneration des Partikelfilters ausgegangen werden. Somit kann auf einfache Art und Weise überprüft werden, ob eine hinreichende Regeneration des Partikelfilters oder Vier-Wege-Katalysators stattgefunden hat.

In einer bevorzugten Ausführungsform des Verfahrens ist vorgesehen, dass das Einbringen von Sekundärluft in die Abgasanlage zeitlich versetzt nach dem Beginn des Aufheizens des elektrisch beheizbaren Drei-Wege-Katalysators beginnt. Zunächst wird der elektrisch beheizbare Drei-Wege-Katalysator durch ein elektrisches Beheizen auf seine Light-Off-Temperatur gebracht, bevor der Verbrennungsmotor von einem stöchiometrischen Verbrennungsluftverhältnis auf ein unterstöchiometrisches Verbrennungsluftverhältnis verstellt wird und gleichzeitig Sekundärluft in die Abgasanlage eingeblasen wird. Dabei erfolgt neben dem elektrischen Beheizen des elektrisch beheizbaren Drei-Wege-Katalysators ein chemisches Beheizen des Abgases durch die exotherme Umsetzung der unverbrannten Abgaskomponenten mit dem Sauerstoff aus dem Sekundärluftsystem. Bis zum Erreichen der Regenerationstemperatur des Partikelfilters oder des Vier-Wege-Katalysators kann die Sekundärluftzufuhr zudem derart gewählt werden, dass sich ein Abgasluftverhältnis von Lambda = 1 einstellt, sodass trotz unterstöchiometrischem Verbrennungsluftverhältnis des Verbrennungsmotors die gasförmigen Schadstoffe effizient durch den mit stöchiometrischem Abgas durchströmten elektrisch beheizbaren Drei-Wege-Katalysator konvertiert werden können. Dadurch werden die gasförmigen Schadstoffe in der Heizphase minimiert. Da für die Oxidation des im Partikelfilter oder Vier-Wege-Katalysator zurückgehaltenen Rußes stets ein Sauerstoffüberschuss vorhanden sein muss, wäre die vollständige Konvertierung der Emissionen während der Regeneration des Partikelfilters oder Vier-Wege-Katalysators nicht gewährleistet. Um diese Phase zu verkürzen oder gänzlich zu verhindern, ist es möglich, den Heizbetrieb mit einem Abgasluftverhältnis von Lambda = 1 durchzuführen und während der Regeneration des Partikelfilters oder Vier-Wege-Katalysators den Verbrennungsmotor wieder mit einem stöchiometrischen Verbrennungsluftverhältnis zu betreiben, sodass die gasförmigen Schadstoffe während der Regeneration durch den motornahen Drei-Wege-Katalysator konvertiert werden können.

In einer vorteilhaften Ausführungsform des Verfahrens ist vorgesehen, dass das Einbringen von Sekundärluft und das elektrische Beheizen des elektrisch beheizbaren Drei-Wege-Katalysators gleichzeitig beendet werden, wenn der Partikelfilter oder der Vier-Wege-Katalysator vollständig regeneriert sind. Dabei kann wieder auf den Normalbetrieb des Verbrennungsmotors mit einem stöchiometrischen Verbrennungsluftverhältnis umgeschaltet und das Sekundärluftsystem abgeschaltet werden.

In einer weiteren bevorzugten Ausführungsform des Verfahrens ist vorgesehen, dass in einer Heizphase des Partikelfilters oder des Vier-Wege-Katalysators der Verbrennungsmotor mit einem unterstöchiometrischen Verbrennungsluftverhältnis betrieben wird, wobei in dieser Heizphase derart Sekundärluft eingeblasen wird, dass sich stromaufwärts des Partikelfilters oder des Vier-Wege-Katalysators ein stöchiometrisches Abgas einstellt, und wobei das Verbrennungsluftverhältnis und/oder die Sekundärlufteinblasung während der Regeneration des Partikelfilters oder des Vier-Wege-Katalysators derart angepasst werden, dass sich während der Regeneration des Partikelfilters oder des Vier-Wege-Katalysators im Abgaskanal stromaufwärts des Partikelfilters oder des Vier-Wege-Katalysators ein überstöchiometrisches Abgas einstellt. Somit kann in der Heizphase eine exotherme Umsetzung der unverbrannten Abgaskomponenten mit der in den Abgaskanal eingeblasenen Sekundärluft erfolgen, wodurch das Aufheizen des Partikelfilters oder Vier-Wege-Katalysators begünstigt wird. Gleichzeitig wird ein stöchiometrisches Abgas eingestellt, wodurch eine effiziente Abgasnachbehandlung dieses Abgases durch einen Drei-Wege-Katalysator oder eine Drei-Wege-katalytisch wirksame Beschichtung einer Abgaskomponente, insbesondere durch einen Vier-Wege-Katalysator, möglich ist. In der Regenerationsphase kann der Verbrennungsmotor mit einem stöchiometrischen Verbrennungsluftverhältnis betrieben werden, sodass die Sekundärluft lediglich den zur Oxidation des im Partikelfilter oder Vier-Wege-Katalysator zurückgehaltenen Rußes notwendigen Sauerstoff bereitstellt. Dadurch ist eine effiziente Abgasnachbehandlung durch den motornahen Drei-Wege-Katalysator möglich. Alternativ kann der Verbrennungsmotor auch weiterhin mit einem unterstöchiometrischen Verbrennungsluftverhältnis betrieben werden, wobei die Sekundärluftmenge derart erhöht wird, dass sich während der Regeneration des Partikelfilters oder Vier-Wege-Katalysators ein überstöchiometrisches Abgas im Abgaskanal vor Eintritt in den Partikelfilter oder den Vier-Wege-Katalysator einstellt. Durch diesen Betriebszustand kann das chemische Beheizen des Partikelfilters oder Vier-Wege-Katalysators auch während der Regeneration aufrecht gehalten werden, wodurch die Gefahr eines Auskühlens und eines Abbruchs der Regeneration aufgrund von zu geringer Temperatur vermieden wird.

In einer vorteilhaften Ausführungsform des Verfahrens ist vorgesehen, dass das Einbringen von Sekundärluft in den Abgaskanal erst dann gestartet wird, wenn der Partikelfilter oder der Vier-Wege-Katalysator seine Regenerationstemperatur erreicht hat. Dadurch kann der Verbrennungsmotor länger mit einem stöchiometrischen Verbrennungsluftverhältnis betrieben werden und die gasförmigen Schadstoffe werden durch den motornahen Drei-Wege-Katalysator während der gesamten Heizphase konvertiert. Da bei dieser Variante jedoch ein zusätzliches chemisches Beheizen des elektrisch beheizbaren Drei-Wege-Katalysators entfällt, wird mehr elektrische Heizleistung benötigt und das Aufheizen des elektrisch beheizbaren Drei-Wege-Katalysators dauert bei ansonsten unveränderten Betriebsbedingungen länger.

In einer alternativen Ausführungsvariante des Verfahrens ist mit Vorteil vorgesehen, dass das elektrische Beheizen des elektrisch beheizbaren Drei-Wege-Katalysators beendet wird, wenn der elektrisch beheizbare Drei-Wege-Katalysator seine Light-Off-Temperatur erreicht hat und das Einbringen von Sekundärluft erst nach Abschluss des Heizvorgangs für den elektrisch beheizbaren Drei-Wege-Katalysator gestartet wird. Dadurch kann während des gesamten Verfahrens zumindest einer der Drei-Wege-Katalysatoren mit einem stöchiometrischen Abgas durchströmt werden, wodurch eine besonders effiziente Konvertierung der gasförmigen Abgaskomponenten erreicht wird. Nachteilig ist jedoch, dass sich der zu regenerierende Partikelfilter oder Vier-Wege-Katalysator während der Regeneration abkühlt und gegebenenfalls erneut aufgeheizt werden muss.

In einer weiteren Ausführungsvariante des Verfahrens ist vorgesehen, dass die Regeneration des Partikelfilters intermittierend erfolgt, wobei der elektrisch beheizbare Drei-Wege-Katalysator jeweils dann elektrisch beheizt wird, wenn die Temperatur des Partikelfilters oder des Vier-Wege-Katalysators unter eine Schwellentemperatur abgesunken ist. Eine intermittierende Regeneration des Partikelfilters verringert die Gefahr eines unkontrollierten Rußabbrandes auf dem Partikelfilter oder Vier-Wege-Katalysators und somit die Gefahr einer thermischen Schädigung der entsprechende Komponente.

In einer vorteilhaften Weiterentwicklung dieses Verfahrens ist vorgesehen, dass die Sekundärlufteinbringung während der intermittierenden Regeneration des Partikelfilters oder des Vier-Wege-Katalysators kontinuierlich erfolgt, bis der Partikelfilter oder der Vier-Wege-Katalysator vollständig regeneriert ist. Dabei wird die Sekundärluftmenge so gewählt, dass sich bei unterstöchiometrischem Betrieb des Verbrennungsmotors ein stöchiometrisches Abgas einstellt und bei stöchiometrischem Verbrennungsluftverhältnis ein überstöchiometrisches Abgas. Dabei können zusätzliche Heizphasen eingeleitet werden, wenn die Bauteiltemperatur des Partikelfilters oder des Vier-Wege-Katalysators unter die Regenerationstemperatur absinkt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein bevorzugtes Ausführungsbeispiel für einen Verbrennungsmotor mit einem erfindungsgemäßen Abgasnachbehandlungssystem;
- Figur 2: ein weiteres Ausführungsbeispiel für einen Verbrennungsmotor mit einem erfindungsgemäßen Abgasnachbehandlungssystem, wobei ein zusätzlicher Wasserstoffkatalysator in der Abgasanlage vorgesehen ist;
- Figur 3: ein weiteres Ausführungsbeispiel für einen Verbrennungsmotor mit einem erfindungsgemäßen Abgasnachbehandlungssystem, wobei der Partikelfilter als Vier-Wege-Katalysator ausgebildet ist;
- Figur 4: ein Diagramm zur Visualisierung eines erfindungsgemäßen Verfahrens zur Regeneration eines Partikelfilters oder Vier-Wege-Katalysators in der Abgasanlage eines Verbrennungsmotors;
- Figur 5: ein zweites Diagramm zur Visualisierung eines alternativen Verfahrens zur Regeneration eines Partikelfilters
- Figur 6: ein drittes Diagramm zur Visualisierung eines alternativen Verfahrens zur Regeneration eines Partikelfilters;
- Figur 7: ein viertes Diagramm zur Visualisierung eines alternativen Verfahrens zur Regeneration eines Partikelfilters; und
- Figur 8: ein weiteres Diagramm zur Visualisierung eines erfindungsgemäßen Verfahrens zur Regeneration eines Partikelfilters.

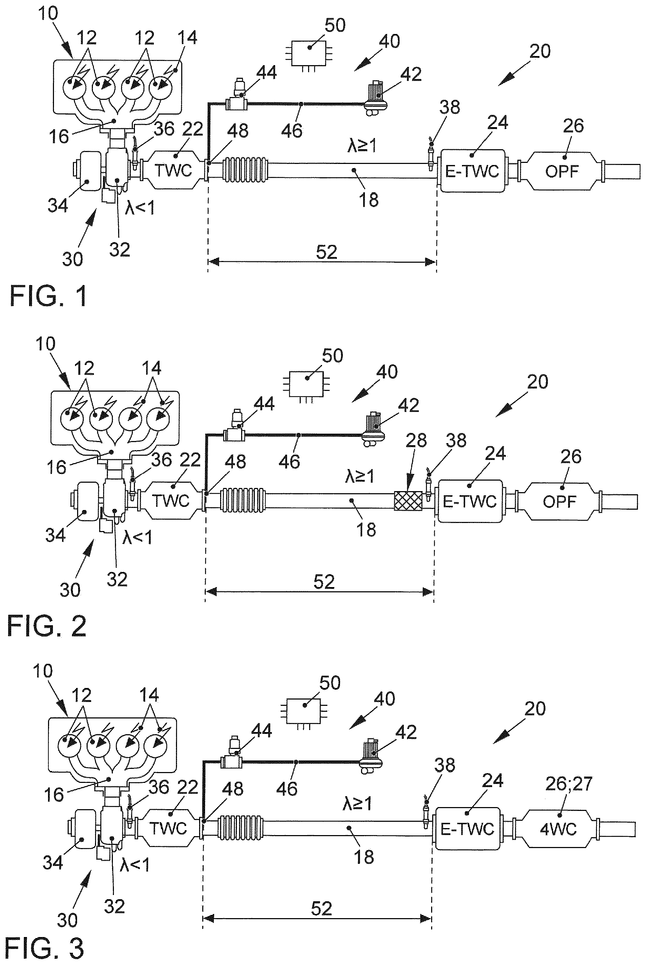

Figur 1 zeigt einen mittels Zündkerzen 14 fremdgezündeten Verbrennungsmotor 10. Der Verbrennungsmotor weist eine Mehrzahl von Brennräumen 12 auf. Der Verbrennungsmotor 10 ist mit seinem Auslass 16 mit einer Abgasanlage 20 verbunden. Die Abgasanlage 20 umfasst einen Abgaskanal 18, in welchem in Strömungsrichtung eines Abgases durch den Abgaskanal 18 eine Turbine 32 eines Abgasturboladers 30, stromabwärts der Turbine 32 ein erster motornaher Drei-Wege-Katalysator 22 und stromabwärts des ersten Drei-Wege-Katalysators 22 ein elektrisch beheizbarer Drei-Wege-Katalysator 24 angeordnet sind. Stromabwärts des elektrisch beheizbaren Drei-Wege-Katalysators 24 ist ein Partikelfilter 26 angeordnet. Der Partikelfilter 26 ist vorzugsweise frei von einer katalytischen Beschichtung ausgeführt. Alternativ kann der Partikelfilter 26 auch wie in Figur 3 dargestellt als Vier-Wege-Katalysator 27, also als Partikelfilter 26 mit einer drei-Wege-katalytisch wirksamen Beschichtung ausgeführt sein. Stromabwärts des Auslasses 16 und stromaufwärts des ersten Drei-Wege-Katalysators 22, vorzugsweise stromabwärts der Turbine 32 des Abgasturboladers 30 und stromaufwärts des ersten Drei-Wege-Katalysators 22 ist in dem Abgaskanal 18 eine erste Lambdasonde 36, vorzugsweise eine Breitband-Lambdasonde, angeordnet. Stromabwärts des ersten Drei-Wege-Katalysators 22 und stromaufwärts des elektrisch beheizbaren Drei-Wege-Katalysators 24 ist im Abgaskanal 18 eine zweite Lambdasonde 38, insbesondere eine weitere Breitbandsonde oder eine Trimm-Lambdasonde, angeordnet. Stromabwärts des elektrisch beheizbaren Drei-Wege-Katalysators 24 und stromaufwärts des Partikelfilters 26 ist im Abgaskanal 18 ein erster Drucksensor vorgesehen. Stromabwärts des Partikelfilters 26 ist ein zweiter Drucksensor vorgesehen, sodass eine Differenzdruckmessung über den Partikelfilter 26 erfolgen kann. Ferner kann in der Abgasanlage 20 mindestens ein Temperatursensor vorgesehen sein, um eine Abgastemperatur und/oder zumindest eine Bauteiltemperatur einer Abgasnachbehandlungskomponente 22, 24, 26, insbesondere eine Temperatur des Partikelfilters 26, zu ermitteln. Das Abgasnachbehandlungssystem umfasst ferner ein Sekundärluftsystem 40 mit einer Sekundärluftpumpe 42 und einer Sekundärluftleitung 46, welche an einer Einleitstelle 48 unmittelbar stromabwärts des motornahen Drei-Wege-Katalysators 22 in den Abgaskanal 18 der Abgasanlage 20 mündet. Dadurch ergibt sich eine möglichst lange Mischstrecke 52 für das Abgas des Verbrennungsmotors 10 und die Sekundärluft vor Eintritt in den elektrisch beheizbaren Drei-Wege-Katalysator 24 und den Partikelfilter 26. In der Sekundärluftleitung 46 ist ein Sekundärluftventil 44 vorgesehen, mit welchem die Sekundärluftzufuhr in den Abgaskanal 18 gesteuert werden kann. Die Sekundärluftpumpe 42 und das Sekundärluftventil 44 sind über ein Motorsteuergerät 50 des Verbrennungsmotors 10 ansteuerbar. Über dieses Steuergerät 50 ist das Verbrennungsluftverhältnis λ_{E} des Verbrennungsmotors 10 in Zusammenwirken mit den Lambdasonden 36, 38 regelbar.

In Figur 2 ist ein alternatives Ausführungsbeispiel eines erfindungsgemäßen Abgasnachbehandlungssystems dargestellt. Bei im Wesentlichen gleichem Aufbau wie zu Figur 1 ausgeführt ist dem elektrisch beheizbaren Drei-Wege-Katalysator 24 ein Wasserstoffkatalysator 28 vorgeschaltet, an welchem der Wasserstoff im Abgas zu Wasserdampf oxidiert wird, um eine Verfälschung des Messsignals an der zweiten Lambdasonde 38 durch den Wasserstoff zu vermeiden.

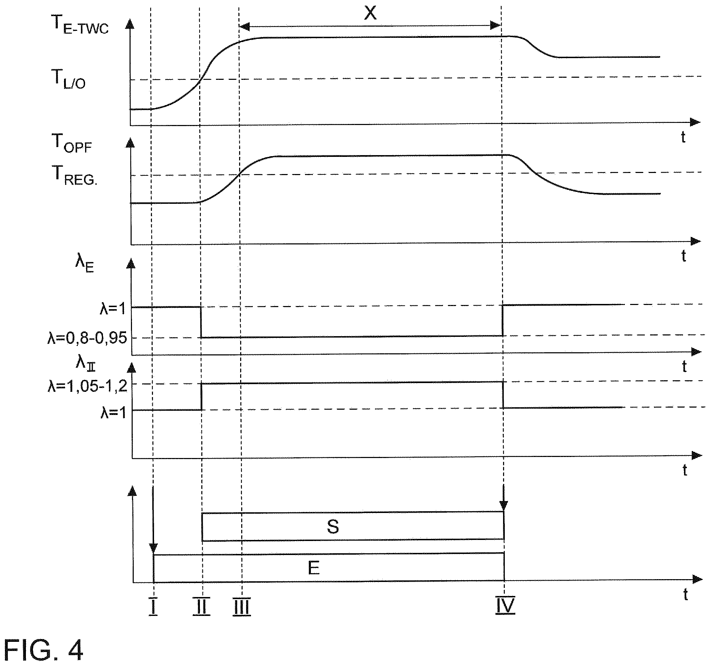

In Figur 4 ist ein Ablaufdiagramm für ein erfindungsgemäßes Verfahren zur Regeneration eines Partikelfilters 26 oder eines Vier-Wege-Katalysators 27 dargestellt. In der Ausgangssituation wird der Verbrennungsmotor 10 mit einem stöchiometrischen Verbrennungsluftverhältnis λ_{E}= 1 betrieben. Zum Startzeitpunkt I wird das elektrische Beheizen E des elektrisch beheizbaren Drei-Wege-Katalysators 24 gestartet. Dieser Betriebszustand wird solange aufrechterhalten, bis der elektrisch beheizbare Drei-Wege-Katalysator 24 seine Light-Off-Temperatur T_{L/O} erreicht hat. Zum Zeitpunkt II wird das Verbrennungsluftverhältnis des Verbrennungsmotors 10 auf ein unterstöchiometrisches Verbrennungsluftverhältnis λ_{E} < 1 verstellt und gleichzeitig das Einblasen von Sekundärluft S aktiviert. Dadurch ergibt sich an der zweiten Lambdasonde 38 vor Eintritt in den elektrisch beheizbaren Drei-Wege-Katalysator 24 ein überstöchiometrisches Abgas. Dabei erfolgt parallel zu dem elektrischen Beheizen des elektrisch beheizbaren Drei-Wege-Katalysators 24 ein chemisches Beheizen, da die unverbrannten Abgaskomponenten exotherm auf dem elektrisch beheizbaren Drei-Wege-Katalysator 24 mit der Sekundärluft umgesetzt werden. Dieser Betriebszustand wird solange aufrechterhalten, bis der Partikelfilter 26 oder der Vier-Wege-Katalysator 27 auf seine Regenerationstemperatur T_{REG} aufgeheizt ist. Hat der Partikelfilter 26 oder der Vier-Wege-Katalysator 27 seine Regenerationstemperatur T_{REG} erreicht, wird der zurückgehaltene Ruß mit dem Sauerstoff aus der Sekundärluft oxidiert und der Partikelfilter 26 oder der Vier-Wege-Katalysator 27 auf diese Weise regeneriert. Die Regeneration ist im Diagramm mit X dargestellt. Ist die Regeneration X des Partikelfilters 26 oder des Vier-Wege-Katalysators 27 abgeschlossen, so werden das elektrische Beheizen E und die Sekundärluftzufuhr S zum Zeitpunkt IV abgeschaltet. Parallel wird der Verbrennungsmotor 10 von dem unterstöchiometrischen Betrieb wieder auf einen stöchiometrischen Betrieb verstellt.

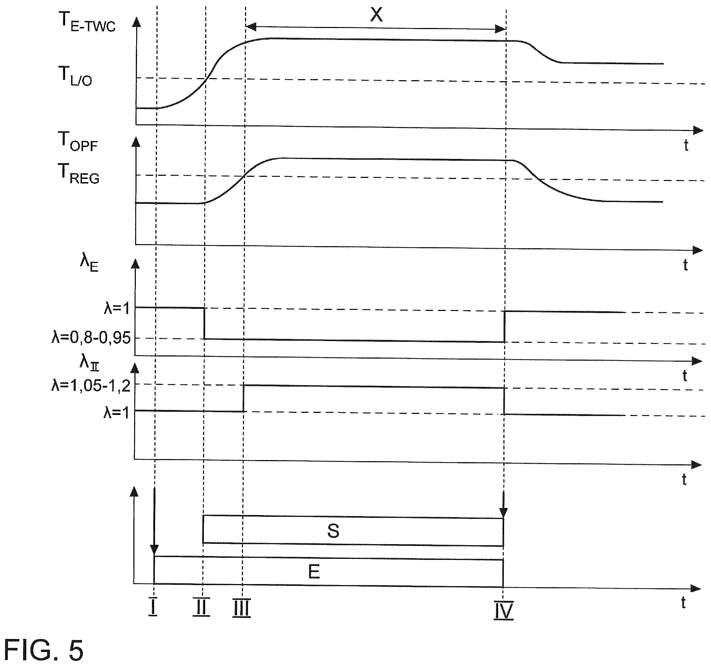

In Figur 5 ist ein alternatives Ausführungsbeispiel für ein erfindungsgemäßes Verfahren zur Regeneration des Partikelfilters 26 oder des Vier-Wege-Katalysators 27 dargestellt. Bei im Wesentlichen gleichem Verlauf wie zu Figur 4 ausgeführt, wird in diesem Ausführungsbeispiel die Sekundärluft zum Zeitpunkt II zunächst so gesteuert, dass sich ein stöchiometrisches Abgas ergibt und erst zum Zeitpunkt III derart erhöht, dass sich ein überstöchiometrisches Abgas einstellt und das Sekundärluftsystem 40 den zur Regeneration des zurückgehaltenen Rußes notwendigen Sauerstoff liefert. Dadurch werden die gasförmigen Emissionen in der Heizphase minimiert, da der elektrisch beheizbare Drei-Wege-Katalysator 24 in der Heizphase noch mit einem stöchiometrischen Abgas beaufschlagt wird und somit zu einer effizienten Konvertierung der gasförmigen Schadstoffe beiträgt.

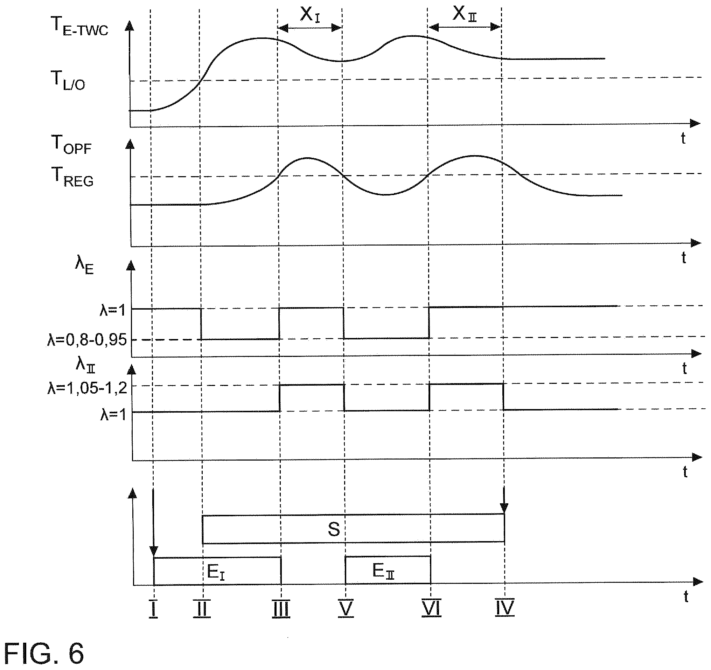

In Figur 6 ist ein weiteres erfindungsgemäßes Verfahren zur Regeneration des Partikelfilters 26 oder des Vier-Wege-Katalysators 27 dargestellt. Bei im Wesentlichem gleichem Ablauf wie zu Figur 4 und Figur 5 dargestellt, ist die Regeneration X des Partikelfilters 26 oder Vier-Wege-Katalysators 27 hier in zwei Phasen X_{I} und X_{II} aufgeteilt. Da für die Oxidation von Ruß stets ein Sauerstoffüberschuss vorhanden sein muss, wäre eine vollständige Konvertierung der Emissionen während der Regeneration des Partikelfilters 26 oder Vier-Wege-Katalysators 27 nicht gewährleistet. Um diese Phase zu verkürzen oder zu verhindern, ist es möglich, den Heizbetrieb mit einem stöchiometrischen Abgas durchzuführen und während der Regenerationsphasen X_{I}, X_{II} den Verbrennungsmotor 10 mit einem stöchiometrischen Verbrennungsluftverhältnis λ_{E} = 1 zu betreiben. Dadurch ist in jeder Phase des Verfahrens sichergestellt, dass zumindest einer der Katalysatoren 22, 24 mit einem stöchiometrischen Abgas durchströmt werden. Bei diesem Verfahren kühlt sich der Partikelfilter 26 oder Vier-Wege-Katalysator 27 jedoch während der Regeneration ab und es muss ein weiterer Heizschritt zum Zeitpunkt V eingeleitet werden. Das elektrische Heizen wird solange aufrecht erhalten bis der Partikelfilter 26 oder Vier-Wege-Katalysator 27 wieder seine Regenerationstemperatur T_{REG} erreicht hat, sodass sich zum Zeitpunkt VI die zweite Regenerationsphase X_{II} anschließt. Sobald der Partikelfilter 26 oder Vier-Wege-Katalysator 27 wieder die Regenerationstemperatur T_{REG} erreicht hat, kann das Abgasluftverhältnis vor Eintritt in den Partikelfilter 26 oder Vier-Wege-Katalysator 27 wieder so eingeregelt werden, dass sich ein leicht überstöchiometrisches Abgasluftverhältnis von 1,05 < λ_{EG} < 1,2 ergibt, um so die Oxidation des Rußes zu ermöglichen. Dieser intermittierende Regenerationsbetrieb wird so lange durchgeführt, bis der Partikelfilter 26 oder der Vier-Wege-Katalysator 27 vollständig regeneriert sind.

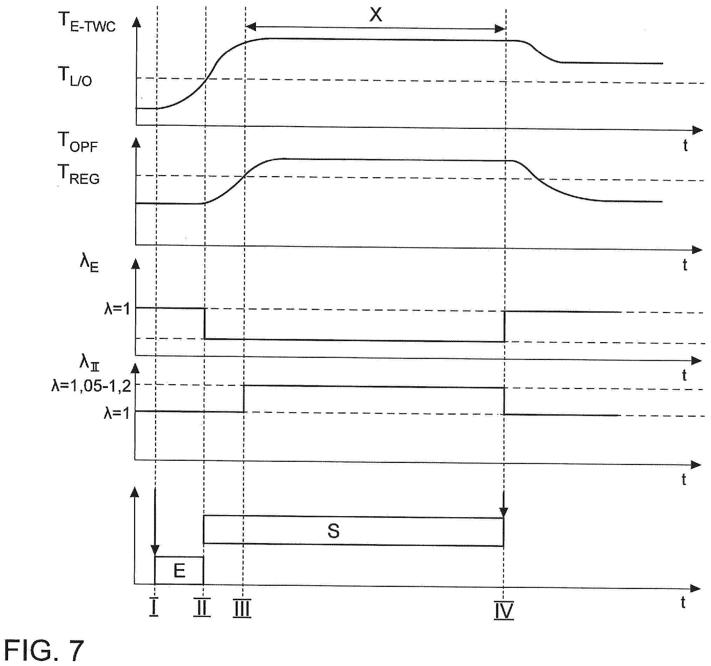

In Figur 7 ist ein weiteres erfindungsgemäßes Verfahren zur Regeneration des Partikelfilters 26 oder Vier-Wege-Katalysator 27 dargestellt. Dabei wird der elektrisch beheizbare Drei-Wege-Katalysator 24 nur solange elektrisch beheizt, bis dieser Katalysator 24 seine Light-Off-Temperatur T_{L/O} erreicht hat. Ab dem Zeitpunkt II erfolgt dann das weitere Beheizen dieses Katalysators 24 durch eine exotherme chemische Reaktion der unverbrannten Abgaskomponenten mit dem Sauerstoff aus der Sekundärluft. Dadurch kann elektrische Energie gespart werden.

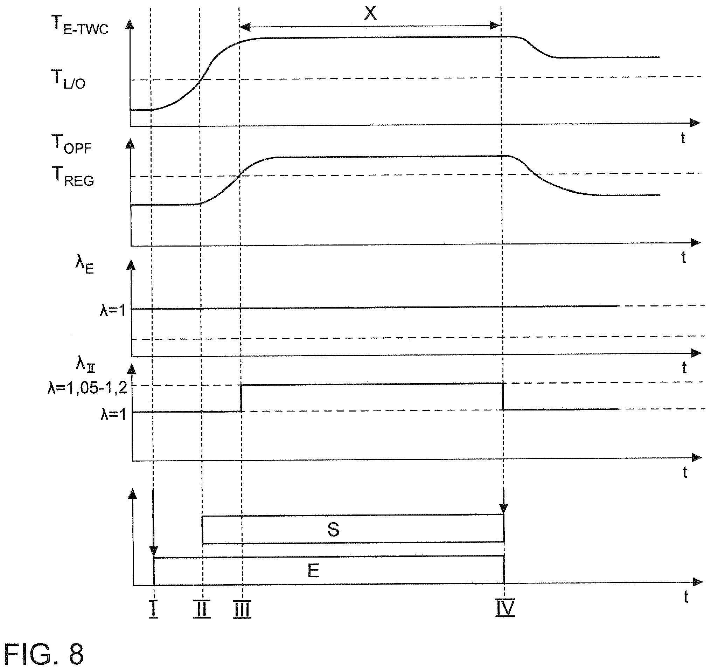

In Figur 8 ist ein weiteres Ausführungsbeispiel für ein erfindungsgemäßes Verfahren dargestellt. Bei dieser Ausführungsvariante wird der Verbrennungsmotor 10 kontinuierlich mit einem stöchiometrischen Verbrennungsluftverhältnis λ_{E} = 1 betrieben und die notwendige Temperaturerhöhung des Partikelfilters 26 oder des Vier-Wege-Katalysators 27 ausschließlich durch ein elektrisches Beheizen des elektrisch beheizbaren Drei-Wege-Katalysators 24 erreicht. Dieses Verfahren bedarf jedoch gegenüber den anderen dargestellten Verfahren einer höheren elektrischen Heizleistung, welche möglicherweise nicht in allen Betriebspunkten ausreicht, um eine Regeneration des Partikelfilters 26 oder des Vier-Wege-Katalysators 27 darzustellen. Diese Lösung zeichnet sich jedoch durch die geringsten Emissionen aus.

### Bezugszeichenliste

- 10: Verbrennungsmotor
- 12: Brennraum
- 14: Zündkerze
- 16: Auslass
- 18: Abgaskanal

- 20: Abgasanlage
- 22: Drei-Wege-Katalysator
- 24: elektrisch beheizbarer Drei-Wege-Katalysator
- 26: Partikelfilter
- 27: Vier-Wege-Katalysator
- 28: Wasserstoffkatalysator

- 30: Abgasturbolader
- 32: Turbine
- 34: Verdichter
- 36: erste Lambdasonde
- 38: zweite Lambdasonde

- 40: Sekundärluftsystem
- 42: Sekundärluftpumpe
- 44: Sekundärluftventil
- 46: Sekundärluftleitung
- 48: Einleitstelle

- 50: Steuergerät
- 52: Mischstrecke

- E: elektrisches Beheizen des elektrisch beheizbaren Drei-Wege-Katalysators
- S: Sekundärlufteinblasung
- X: Regeneration des Partikelfilters

- T: Temperatur
- T_{E-TWC}: Temperatur am elektrisch beheizbaren Drei-Wege-Katalysator
- T_{LO}: Light-Off-Temperatur
- T_{OPF}: Temperatur des Partikelfilters
- T_{REG}: Regenerationstemperatur des Partikelfilters

- λ_{E}: Verbrennungsluftverhältnis des Verbrennungsmotors
- λ_{II}: Abgasluftverhältnis am Eingang des elektrisch beheizbaren Drei-Wege-Katalysators 10

## Patentansprüche

1. Abgasnachbehandlungssystem für einen Verbrennungsmotor (10) mit einer Abgasanlage (20), umfassend einen motornahen Drei-Wege-Katalysator (22) und einen stromabwärts des motornahen Drei-Wege-Katalysators (22) angeordneten Partikelfilter (26) oder Vier-Wege-Katalysator (27), **dadurch gekennzeichnet, dass** stromabwärts des Drei-Wege-Katalysators (22) und stromaufwärts des Partikelfilters (26) oder des Vier-Wege-Katalysators (27) ein elektrisch beheizbarer Drei-Wege-Katalysator (24) angeordnet ist, wobei stromabwärts des motornahen Drei-Wege-Katalysators (22) und stromaufwärts des elektrisch beheizbaren Drei-Wege-Katalysators (24) eine Einleitstelle (48) zum Einleiten von Sekundärluft in einen Abgaskanal (18) der Abgasanlage (20) ausgebildet ist, wobei stromabwärts der Einleitstelle (48) und stromaufwärts des elektrisch beheizbaren Drei-Wege-Katalysators (24) ein Wasserstoff-Katalysator (28) angeordnet ist.

2. Abgasnachbehandlungssystem nach Anspruch 1, **dadurch gekennzeichnet, dass** der Partikelfilter (26) frei von einer katalytisch wirksamen Beschichtung ausgeführt ist.

3. Abgasnachbehandlungssystem nach Anspruch 1 oder 2, **dadurch gekennzeichnet, dass** der elektrisch beheizbare Drei-Wege-Katalysator (24) frei von einem Sauerstoffspeicher ausgeführt ist.

4. Abgasnachbehandlungssystem nach der Ansprüche 1 bis 3, **dadurch gekennzeichnet, dass** in der Abgasanlage (20) stromaufwärts des motornahen Drei-Wege-Katalysators (22) eine erste Lambdasonde (36), sowie stromabwärts des Wasserstoff-Katalysators (28) und stromaufwärts des elektrisch beheizbaren Drei-Wege-Katalysators (24) eine zweite Lambdasonde (38) angeordnet sind.

5. Abgasnachbehandlungssystem nach Anspruch 3, **dadurch gekennzeichnet, dass** der Partikelfilter (26) mit einer drei-Wege-katalytisch wirksamen Beschichtung als Vier-Wege-Katalysator (27) ausgeführt ist und in der Abgasanlage (20) stromaufwärts des motornahen Drei-Wege-Katalysators (22) eine erste Lambdasonde (36), sowie stromabwärts des elektrisch beheizbaren Katalysator (24) und stromaufwärts des Vier-Wege-Katalysators (27) eine zweite Lambdasonde (38) angeordnet sind.

6. Abgasnachbehandlungssystem nach einem der Ansprüche 1 bis 5, **dadurch gekennzeichnet, dass** die Sekundärluft durch ein Sekundärluftsystem (40) bereitgestellt wird, welches eine Sekundärluftpumpe (42) und eine Sekundärluftleitung (46) umfasst, welche die Sekundärluftpumpe (42) mit der Einleitstelle (48) verbindet, wobei in der Sekundärluftleitung (46) ein Sekundärluftventil (44) angeordnet ist.

7. Verfahren zur Regeneration eines Partikelfilters (26) oder eines Vier-Wege-Katalysators (27) in einer Abgasanlage (20) eines Verbrennungsmotors (10), wobei der Verbrennungsmotor (10) mit seinem Auslass (16) mit der Abgasanlage (20) verbunden ist, in welcher in Strömungsrichtung eines Abgases durch die Abgasanlage (20) ein motornaher Drei-Wege-Katalysator (22), stromabwärts des motornahen Drei-Wege-katalysators (22) ein elektrisch beheizbarer Drei-Wege-Katalysator (24) und stromabwärts des elektrisch beheizbaren Drei-Wege-Katalysators (24) ein Partikelfilter (26) oder ein Vier-Wege-Katalysator (27) angeordnet sind, wobei stromabwärts des motornahen Drei-Wege-Katalysators (22) und stromaufwärts des elektrisch beheizbaren Drei-Wege-Katalysators (24) eine Einleitstelle (48) zum Einleiten von Sekundärluft in einen Abgaskanal (18) der Abgasanlage (20) ausgebildet ist, und stromabwärts der Einleitstelle (48) und stromaufwärts des elektrisch beheizbaren Drei-Wege-Katalysators (24) ein Wasserstoff-Katalysator (28) angeordnet ist, sowie mit einem Sekundärluftsystem (40), mit welchem stromabwärts des motornahen Drei-Wege-Katalysators (22) und stromaufwärts des Wasserstoff-Katalysators (28) Sekundärluft in einen Abgaskanal (18) der Abgasanlage (20) einleitbar ist, umfassend folgende Schritte:
- Aktivieren des elektrisch beheizbaren Drei-Wege-Katalysators (24), wenn eine Regeneration des Partikelfilters (26) oder des Vier-Wege-Katalysators (27) angefordert wird,
- Aufheizen des elektrisch beheizbaren Drei-Wege-Katalysators (24) auf seine Light-Off-Temperatur (T_{LO}),
- Verstellen des Verbrennungsluftverhältnisses des Verbrennungsmotors (10) von einem stöchiometrischen Verbrennungsluftverhältnis (λ_{E} = 1) auf ein unterstöchiometrisches Verbrennungsluftverhältnis (λ_{E} < 1), sowie gleichzeitiges
- Einblasen von Sekundärluft in die Abgasanlage (20) stromabwärts des motornahen Drei-Wege-Katalysators (22), sodass sich ein überstöchiometrisches Abgasluftverhältnis (λ_{EG} > 1) am Eingang des Partikelfilters (26) oder des Vier-Wege-Katalysators (27) einstellt.

8. Verfahren nach Anspruch 7, **dadurch gekennzeichnet, dass** die Regeneration des Partikelfilters (26) oder Vier-Wege-Katalysators (27) beendet wird, wenn die Druckdifferenz über den Partikelfilter (26) oder Vier-Wege-Katalysator (27) einen Schwellenwert (pₛ) unterschreitet.

9. Verfahren nach Anspruch 7 oder 8, **dadurch gekennzeichnet, dass** das Einbringen von Sekundärluft in die Abgasanlage (20) zeitlich versetzt nach dem Beginn des Aufheizens des elektrisch beheizbaren Drei-Wege-Katalysators (24) beginnt.

10. Verfahren nach einem der Ansprüche 7 bis 9, **dadurch gekennzeichnet, dass** das Einbringen von Sekundärluft und das elektrische Beheizen des elektrisch beheizbaren Drei-Wege-Katalysators (24) gleichzeitig beendet werden, wenn der Partikelfilter (26) oder der Vier-Wege-Katalysator (27) vollständig regeneriert sind.

11. Verfahren nach einem der Ansprüche 7 bis 10, **dadurch gekennzeichnet, dass** in einer Heizphase des Partikelfilters der Verbrennungsmotor (10) mit einem unterstöchiometrischen Verbrennungsluftverhältnis (λ < 1) betrieben wird, wobei in dieser Heizphase derart Sekundärluft eingeblasen wird, dass sich stromaufwärts des Partikelfilters (26) oder des Vier-Wege-Katalysators (27) ein stöchiometrisches Abgas einstellt, und wobei das Verbrennungsluftverhältnis und/oder die Sekundärlufteinblasung während der Regeneration des Partikelfilters (26) oder des Vier-Wege-Katalysators (27) derart angepasst werden, dass sich während der Regeneration des Partikelfilters (26) oder des Vier-Wege-Katalysators (27) im Abgaskanal (18) stromaufwärts des Partikelfilters (26) oder des Vier-Wege-Katalysators (27) ein überstöchiometrisches Abgas einstellt.

12. Verfahren nach einem der Ansprüche 7 bis 9, **dadurch gekennzeichnet, dass** das elektrische Beheizen des elektrisch beheizbaren Drei-Wege-Katalysators (24) beendet wird, wenn der elektrisch beheizbare Drei-Wege-Katalysator (24) seine Light-Off-Temperatur (T_{LO}) erreicht hat und das Einbringen von Sekundärluft erst nach Abschluss des Heizvorgangs für den elektrisch beheizbaren Drei-Wege-Katalysator (24) gestartet wird.

13. Verfahren nach einem der Ansprüche 7 bis 9, **dadurch gekennzeichnet, dass** die Regeneration des Partikelfilters (26) oder des Vier-Wege-Katalysators (27) intermittierend erfolgt, wobei der elektrisch beheizbare Drei-Wege-Katalysator (24) jeweils dann elektrisch beheizt wird, wenn die Temperatur des Partikelfilters (26) oder des Vier-Wege-Katalysators (27) unter eine Schwellentemperatur (Tₛ) abgesunken ist.

14. Verfahren nach Anspruch 13, **dadurch gekennzeichnet, dass** die Sekundärlufteinbringung während der intermittierenden Regeneration des Partikelfilters (26) oder des Vier-Wege-Katalysators (27) kontinuierlich erfolgt, bis der Partikelfilter (26) oder der Vier-Wege-Katalysator (27) vollständig regeneriert ist.

## Claims

1. Exhaust gas treatment system for an internal combustion engine (10) with an exhaust gas system (20), comprising a three-way catalytic converter (22) close to the engine and a particle filter (26) or four-way catalytic converter (27) arranged downstream of the three-way catalytic converter (22) that is close to the engine, **characterized in that** an electrically heatable, three-way catalytic converter (24) is arranged downstream of the three-way catalytic converter (22) and upstream of the particle filter (26) or of the four-way catalytic converter (27), wherein, downstream of the three-way catalytic converter (22) that is close to the engine and upstream of the electrically heatable, three-way catalytic converter (24), an introduction point (48) is formed for introducing secondary air into an exhaust gas channel (18) of the exhaust gas system (20), wherein a hydrogen catalytic converter (28) is arranged downstream of the introduction point (48) and upstream of the electrically heatable, three-way catalytic converter (24).

2. Exhaust gas treatment system according to Claim 1, **characterized in that** the particle filter (26) is designed to be free of a catalytically active coating.

3. Exhaust gas treatment system according to Claims 1 or 2, **characterized in that** the electrically heatable, three-way catalytic converter (24) is designed to be free of an oxygen storage.

4. Exhaust gas treatment system according to Claims 1 to 3, **characterized in that**, in the exhaust gas system (20), a first lambda probe (36) is arranged upstream of the three-way catalytic converter (22) that is close to the engine, and a second lambda probe (38) is arranged downstream of the hydrogen catalytic converter (28) and upstream of the electrically heatable, three-way catalytic converter (24).

5. Exhaust gas treatment system according to Claim 3, **characterized in that** the particle filter (26) with a three-way, catalytically active coating is designed as four-way catalytic converter (27), and, in the exhaust gas system (20), a first lambda probe (36) is arranged upstream of the three-way catalytic converter (22) that is close to the engine, and a second lambda probe (38) is arranged downstream of the electrically heatable catalytic converter (24) and upstream of the four-way catalytic converter (27).

6. Exhaust gas treatment system according to any one of Claims 1 to 5, **characterized in that** the secondary air is provided by a secondary air system (40) which comprises a secondary air pump (42) and a secondary air line (46) which connects the secondary air pump (42) to the introduction point (48), wherein a secondary air valve (44) is arranged in the secondary air line (46).

7. Method for regenerating a particle filter (26) or a four-way catalytic converter (27) in an exhaust gas system (20) of an internal combustion engine (10), wherein the internal combustion engine (10), via its outlet (16), is connected to the exhaust gas system (20) in which, in the direction in which an exhaust gas flows through the exhaust gas system (20), a three-way catalytic converter (22) close to the engine, downstream of the three-way catalytic converter (22) that is close to the engine, an electrically heatable, three-way catalytic converter (24), and, downstream of the electrically heatable, three-way catalytic converter (24), a particle filter (26) or a four-way catalytic converter (27) are arranged, wherein an introduction point (48) for introducing secondary air into an exhaust gas channel (18) of the exhaust gas system (20) is formed downstream of the three-way catalytic converter (22) that is close to the engine and upstream of the electrically heatable, three-way catalytic converter (24), and a hydrogen catalytic converter (28) is arranged downstream of the introduction point (48) and upstream of the electrically heatable, three-way catalytic converter (24), and with a secondary air system (40), with which, secondary air can be introduced into an exhaust gas channel (18) of the exhaust gas system (20) downstream of the three-way catalytic converter (22) that is close to the engine and upstream of the hydrogen catalytic converter (28), comprising the following steps:
- activating the electrically heatable, three-way catalytic converter (24) when regeneration of the particle filter (26) or of the four-way catalytic converter (27) is demanded,
- heating the electrically heatable, three-way catalytic converter (24) up to its light-off temperature (T_{LO}),
- adjusting the combustion-air ratio of the internal combustion engine (10) from a stoichiometric combustion-air ratio (λ_{E} = 1) to a sub-stoichiometric combustion-air ratio (λ_{E} < 1), and, simultaneously,
- injecting secondary air into the exhaust gas system (20) downstream of the three-way catalytic converter (22) that is close to the engine, so that a super-stoichiometric exhaust gas-air ratio (λ_{EG} > 1) is established at the inlet of the particle filter (26) or of the four-way catalytic converter (27).

8. Method according to Claim 7, **characterized in that** the regeneration of the particle filter (26) or of the four-way catalytic converter (27) is concluded when the pressure difference across the particle filter (26) or the four-way catalytic converter (27) falls below a threshold value (p_{S}).

9. Method according to Claims 7 or 8, **characterized in that** the introduction of secondary air into the exhaust gas system (20) starts temporally offset after the start of heating the electrically heatable, three-way catalytic converter (24).

10. Method according to Claims 7 to 9, **characterized in that** the introduction of secondary air and the electrical heating of the electrically-heatable, three-way catalytic converter (24) are ended simultaneously when the particle filter (26) or the four-way catalytic converter (27) have been completely regenerated.

11. Method according to any one of Claims 7 to 10, **characterized in that**, during a heating phase of the particle filter, the internal combustion engine (10) is operated with a sub-stoichiometric combustion-air ratio (A < 1), wherein, during this heating phase, secondary air is injected in such a way that, upstream of the particle filter (26) or of the four-way catalytic converter (27), a stoichiometric exhaust gas is established, and wherein the combustion-air ratio and/or the injection of the secondary air during the regeneration of the particle filter (26) or of the four-way catalytic converter (27) are adjusted in such a way that, during the regeneration of the particle filter (26) or of the four-way catalytic converter (27) in the exhaust gas channel (18) upstream of the particle filter (26) or of the four-way catalytic converter (27), a super-stoichiometric exhaust gas is established.

12. Method according to any one of Claims 7 to 9, **characterized in that** the electrical heating of the electrically heatable, three-way catalytic converter (24) is terminated when the electrically heatable, three-way catalytic converter (24) has reached its light-off temperature (T_{LO}), and the introduction of secondary air is started only after completion of the heating process for the electrically heatable, three-way catalytic converter (24).

13. Method according to any one of Claims 7 to 9, **characterized in that** the regeneration of the particle filter (26) or of the four-way catalytic converter (27) takes place intermittently, wherein the electrically heatable, three-way catalytic converter (24) is then electrically heated in each case when the temperature of the particle filter (26) or of the four-way catalytic converter (27) has fallen below a threshold temperature (Tₛ).

14. Method according to Claim 13, **characterized in that** the introduction of secondary air during the intermittent regeneration of the particle filter (26) or of the four-way catalytic converter (27) takes place continuously until the particle filter (26) or the four-way catalytic converter (27) have been completely regenerated.

## Revendications

1. Système de post-traitement des gaz d'échappement pour un moteur à combustion interne (10) avec une installation de gaz d'échappement (20), comprenant un catalyseur à trois voies (22) proche du moteur et un filtre à particules (26) ou catalyseur à quatre voies (27) disposé en aval du catalyseur à trois voies (22) proche du moteur, **caractérisé en ce que**, en aval du catalyseur à trois voies (22) et en amont du filtre à particules (26) ou du catalyseur à quatre voies (27), un catalyseur à trois voies à chauffage électrique (24) est disposé, dans lequel, en aval du catalyseur à trois voies (22) proche du moteur et en amont du catalyseur à trois voies à chauffage électrique (24), un point d'introduction (48) destiné à l'introduction d'air secondaire dans un canal de gaz d'échappement (18) de l'installation de gaz d'échappement (20) est formé, dans lequel, en aval du point d'introduction (48) et en amont du catalyseur à trois voies à chauffage électrique (24), un catalyseur d'hydrogène (28) est disposé.

2. Système de post-traitement des gaz d'échappement selon la revendication 1, **caractérisé en ce que** le filtre à particules (26) est réalisé dépourvu d'un revêtement à action catalytique.

3. Système de post-traitement des gaz d'échappement selon la revendication 1 ou 2, **caractérisé en ce que** le catalyseur à trois voies à chauffage électrique (24) est réalisé dépourvu d'un stockage d'oxygène.

4. Système de post-traitement des gaz d'échappement selon les revendications 1 à 3, **caractérisé en ce que**, dans l'installation de gaz d'échappement (20), en amont du catalyseur à trois voies (22) proche du moteur, une première sonde lambda (36) est disposée et en aval du catalyseur d'hydrogène (28) et en amont du catalyseur à trois voies à chauffage électrique (24) une deuxième sonde lambda (38) est disposée.

5. Système de post-traitement des gaz d'échappement selon la revendication 3, **caractérisé en ce que** le filtre à particules (26) avec un revêtement à action catalytique à trois voies est réalisé comme un catalyseur à quatre voies (27) et, dans l'installation de gaz d'échappement (20), en amont du catalyseur à trois voies (22) proche du moteur, une première sonde lambda (36) est disposée et, en aval du catalyseur à chauffage électrique (24) et en amont du catalyseur à quatre voies (27), une deuxième sonde lambda (38) est disposée.

6. Système de post-traitement des gaz d'échappement selon l'une quelconque des revendications 1 à 5, **caractérisé en ce que** l'air secondaire est mis à disposition par le biais d'un système à air secondaire (40), qui comprend une pompe à air secondaire (42) et une conduite d'air secondaire (46), qui relie la pompe à air secondaire (42) au point d'introduction (48), dans lequel, dans la conduite d'air secondaire (46), une soupape d'air secondaire (44) est disposée.

7. Procédé de régénération d'un filtre à particules (26) ou d'un catalyseur à quatre voies (27) dans une installation de gaz d'échappement (20) d'un moteur à combustion interne (10), dans lequel le moteur à combustion interne (10) est relié avec sa sortie (16) avec l'installation de gaz d'échappement (20), dans laquelle, dans la direction d'écoulement d'un gaz d'échappement à travers l'installation de gaz d'échappement (20), un catalyseur à trois voies (22) proche du moteur, en aval du catalyseur à trois voies (22) proche du moteur un catalyseur à trois voies à chauffage électrique (24) et en aval du catalyseur à trois voies à chauffage électrique (24) un filtre à particules (26) ou un catalyseur à quatre voies (27) sont disposés, dans lequel en aval du catalyseur à trois voies (22) proche du moteur et en amont du catalyseur à trois voies à chauffage électrique (24), un point d'introduction (48) destiné à l'introduction d'air secondaire dans un canal de gaz d'échappement (18) de l'installation de gaz d'échappement (20) est formé et en aval du point d'introduction (48) et en amont du catalyseur à trois voies à chauffage électrique (24) un catalyseur d'hydrogène (28) est disposé, ainsi qu'avec un système d'air secondaire (40), avec lequel, en aval du catalyseur à trois voies (22) proche du moteur et en amont du catalyseur d'hydrogène (28) de l'air secondaire peut être introduit dans un canal de gaz d'échappement (18) de l'installation de gaz d'échappement (20), comprenant les étapes suivantes :
- activation du catalyseur à trois voies à chauffage électrique (24), lorsqu'une régénération du filtre à particules (26) ou du catalyseur à quatre voies (27) est demandée,
- chauffage du catalyseur à trois voies à chauffage électrique (24) jusqu'à sa température d'allumage (T_{LO}),
- réglage du taux d'air de combustion du moteur à combustion interne (10) d'un taux d'air de combustion stœchiométrique (λ_{E} = 1) à un taux d'air de combustion sous-stœchiométrique (λ_{E} < 1) et simultanément
- soufflage d'air secondaire dans l'installation de gaz d'échappement (20) en aval du catalyseur à trois voies (22) proche du moteur, de sorte qu'un taux d'air de gaz d'échappement sur-stœchiométrique (λ_{EG} > 1) s'installe à l'entrée du filtre à particules (26) ou du catalyseur à quatre voies (27).

8. Procédé selon la revendication 7, **caractérisé en ce que** la régénération du filtre à particules (26) ou du catalyseur à quatre voies (27) est achevée lorsque la différence de pression sur le filtre à particules (26) ou le catalyseur à quatre voies (27) dépasse une valeur seuil (p_{S}).

9. Procédé selon la revendication 7 ou 8, **caractérisé en ce que** l'introduction d'air secondaire dans l'installation de gaz d'échappement (20) commence avec un décalage dans le temps après le début du chauffage du catalyseur à trois voies à chauffage électrique (24).

10. Procédé selon l'une quelconque des revendications 7 à 9, **caractérisé en ce que** l'introduction d'air secondaire et le chauffage électrique du catalyseur à trois voies à chauffage électrique (24) sont achevés simultanément lorsque le filtre à particules (26) ou le catalyseur à quatre voies (27) est totalement régénéré.

11. Procédé selon l'une quelconque des revendications 7 à 10, **caractérisé en ce que**, dans une phase de chauffage du filtre à particules, le moteur à combustion interne (10) est actionné avec un taux d'air de combustion sous-stœchiométrique (λ < 1), dans lequel dans cette phase de chauffage de l'air secondaire est soufflé de telle sorte qu'un gaz d'échappement stœchiométrique s'installe en amont du filtre à particules (26) ou du catalyseur à quatre voies (27) et dans lequel le taux d'air de combustion et/ou le soufflage d'air secondaire sont adaptés pendant la régénération du filtre à particules (26) ou du catalyseur à quatre voies (27) de telle sorte que, pendant la régénération du filtre à particules (26) ou du catalyseur à quatre voies (27), dans le canal de gaz d'échappement (18) en amont du filtre à particules (26) ou du catalyseur à quatre voies (27), un gaz d'échappement sur-stœchiométrique s'installe.

12. Procédé selon l'une quelconque des revendications 7 à 9, **caractérisé en ce que** le chauffage électrique du catalyseur à trois voies à chauffage électrique (24) est achevé lorsque le catalyseur à trois voies à chauffage électrique (24) a atteint sa température d'allumage (T_{LO}) et l'introduction d'air secondaire n'est commencée qu'après la fin du processus de chauffage pour le catalyseur à trois voies à chauffage électrique (24).

13. Procédé selon l'une quelconque des revendications 7 à 9, **caractérisé en ce que** la régénération du filtre à particules (26) ou du catalyseur à quatre voies (27) est effectuée de manière intermittente, dans lequel le catalyseur à trois voies à chauffage électrique (24) est chauffé électriquement respectivement quand la température du filtre à particules (26) ou du catalyseur à quatre voies (27) a chuté sous une température seuil (Tₛ).

14. Procédé selon la revendication 13, **caractérisé en ce que** l'introduction d'air secondaire pendant la régénération intermittente du filtre à particules (26) ou du catalyseur à quatre voies (27) est effectuée en continu, jusqu'à ce que le filtre à particules (26) ou le catalyseur à quatre voies (27) soit totalement régénéré.
